(19) Europäisches Patentamt
European Patent Office
Office européen des brevets

(11) **EP 2 403 113 A1**

(12) **EUROPEAN PATENT APPLICATION**

(43) Date of publication:
**04.01.2012 Bulletin 2012/01**

(51) Int Cl.:
**H02K 3/40** *(2006.01)*      *H02K 3/14 (2006.01)*

(21) Application number: **10168235.9**

(22) Date of filing: **02.07.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Alstom Technology Ltd**
**5400 Baden (CH)**

(72) Inventors:
• **Baumann, Thomas**
  **CH-5430, Wettingen (CH)**
• **Vezzoli, Massimiliano**
  **CH-5236, Remigen (CH)**
• **Stoll, Dieter**
  **CH-5507, Mellingen (CH)**
• **Haldemann, Johann**
  **CH-5242, Birr (CH)**

(54) **Stator Bar**

(57)      The high voltage stator bar (1) comprises a substantially quadrangular conductive element made of a plurality of interwoven strands (3) and an electric insulation (4) applied around it. The permittivity at the corners (5) of the electric insulation (4) decreases by less than 60% from an inner insulation zone (6) facing the conductive element (2) towards an outer insulation zone (7).

Fig. 2

Fig. 3

**Description**

TECHNICAL FIELD

The present invention relates to a stator bar of a large rotating electric machine such as a generator, in particular an indirectly cooled generator with more than 100 MW output power and nominal voltage greater than 10 kVAC.

BACKGROUND OF THE INVENTION

Stator bars are known to comprise a plurality of interwoven conductive copper strands defining a conductive element (i.e. the so-called green bar) having a rectangular shape (plain Roebel bars).

This bar is covered with insulation typically made of a mica tape impregnated with a resin (insulated Roebel bar).

Because of the rectangular shape, four sharp corners are defined, which during operation generate very high electrical field peaks; these peaks limit the maximum electric voltage that can be applied to the stator bars and, in turn, they limit the achievable power.

In order to reduce the electrical field peaks, it is known to round the corners of the conductive element, such that typically a radius between 0.5-2.5 millimetres is achieved.

The beneficial effect of the rounding is quite high when the radius is small, but when increasing the radius the beneficial effect decreases and for a radius of about 2.5 millimetres the beneficial effect cannot be practically further improved in this way.

In order to reduce the electrical field peaks at the corners of the stator bars, WO 2007/139,490 discloses to vary the insulation permittivity in the circumferential direction, such that the insulation has a higher permittivity at its corners.

Since the permittivity is only regulated in the circumferential direction, an insulation such as the one of WO 2007/139,490 does not efficiently use the dielectric material constituting it.

In addition, DE 198 11 370 discloses to vary the insulation permittivity in the radial direction.

With reference to the insulation permittivity, model calculations showed that when the ratio

$$\varepsilon_{(corners)}/\varepsilon_{(elswere)}$$

between the insulation permittivity at the corners (close to the conductive element) and the insulation permittivity elsewhere (in the radial direction) is greater than an optimum value, an electric field is induced at the transition that may be higher than the field at the corners (close to the conductive element) with insulation having a uniform permittivity (i.e. a single permittivity value).

It is clear that in this case no real improvement is achieved, since a very high electric field actually exists in the insulation.

SUMMARY OF THE INVENTION

The technical aim of the present invention is therefore to provide a stator bar by which the said problems of the known art are eliminated.

Within the scope of this technical aim, an aspect of the invention is to provide a stator bar in which the electric field peaks at the conductive element corners (these are the most electrically stressed zones of the stator bars) are reduced.

Another aspect of the invention is to provide a stator bar in which the dielectric material is efficiently used, such that high permittivity insulation is only used where needed.

The technical aim, together with these and further aspects, are attained according to the invention by providing a stator bar in accordance with the accompanying claims.

BRIEF DESCRIPTION OF THE DRAWINGS

Further characteristics and advantages of the invention will be more apparent from the description of a preferred but non-exclusive embodiment of the stator bar according to the invention, illustrated by way of nonlimiting example in the accompanying drawings, in which:

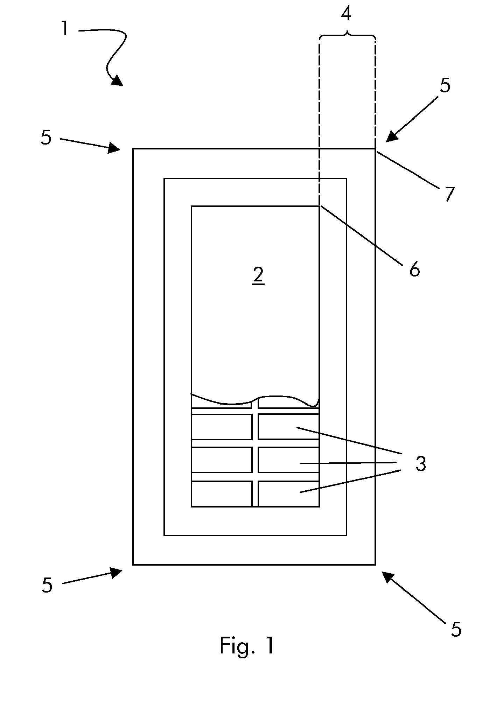

Figure 1 generally shows a stator bar in an embodiment of the invention;
Figures 2 and 3 respectively show a stator bar and the corresponding permittivity run in the direction of maximum field in an embodiment of the invention with two different mica tapes;
Figures 4 and 5 respectively show a stator bar and the corresponding permittivity run in the direction of maximum field in an embodiment of the invention with mica tapes including different amounts of high permittivity particles;
Figures 6 and 7 respectively show a stator bar and the corresponding permittivity run in the direction of maximum field in an embodiment of the invention with mica tapes with a wrapping tension that varies during wrapping; and
Figure 8 shows a corner of a conductive element or green bar; in this figure the insulation is not shown.

DETAILED DESCRIPTION OF THE INVENTION

With reference to the figures, these show a stator bar (in particular a high voltage stator bar) generally indicated by the reference 1.

The stator bar 1 comprises a substantially quadrangular conductive element 2 made of a plurality of interwoven strands 3 (green bar) and an electric insulation

4 applied around it to define a main insulation of the stator bar.

The electric insulation 4 has a permittivity at its corners 5 that decreases from an inner insulation zone 6 facing the conductive element 2 towards an outer insulation zone 7.

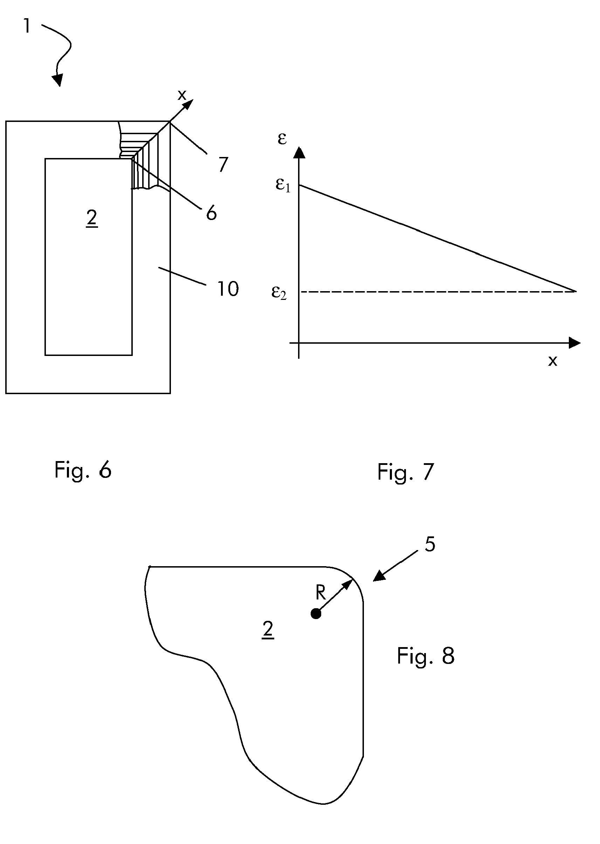

Change in permittivity also depends on the radius R of the corners 5 (see figure 8), since the radius R influences the electric field.

Advantageously the permittivity decreases by less than 60% when the radius R of the corner 5 is less than 3 millimetres and preferably between 35-45% when the corner radius R is comprised between 1.5-2.5 millimetres.

As known, the higher the permittivity, the lower the electric field in a dielectric material; thus since the electric field around a stator bar 1 is higher at the corners 5 and in particular in the corner zones close to the conductive element 2, a permittivity increase only in those zones lets the electric field peaks be reduced, without reducing the overall permittivity and thus the overall electric field; this lets the power performances be improved.

The selected differential permittivity between the zones 6 and 7 lets an electric field be generated at the transition zone between the dielectric materials having different permittivity that is generally limited and in particular smaller than the electric field peaks generated when the insulation 4 has only one permittivity value.

If, however, the difference in permittivity exceeds the values of 60% given above, a peak in the electrical field may appear at the transition from zone 6 to 7, which exceeds the field in an insulation 4 with only one permittivity value.

Typically, the insulation 4 comprises a mica tape impregnated with a resin.

In the following some preferred embodiments of the invention are described; it is anyhow clear that also further embodiments are possible.

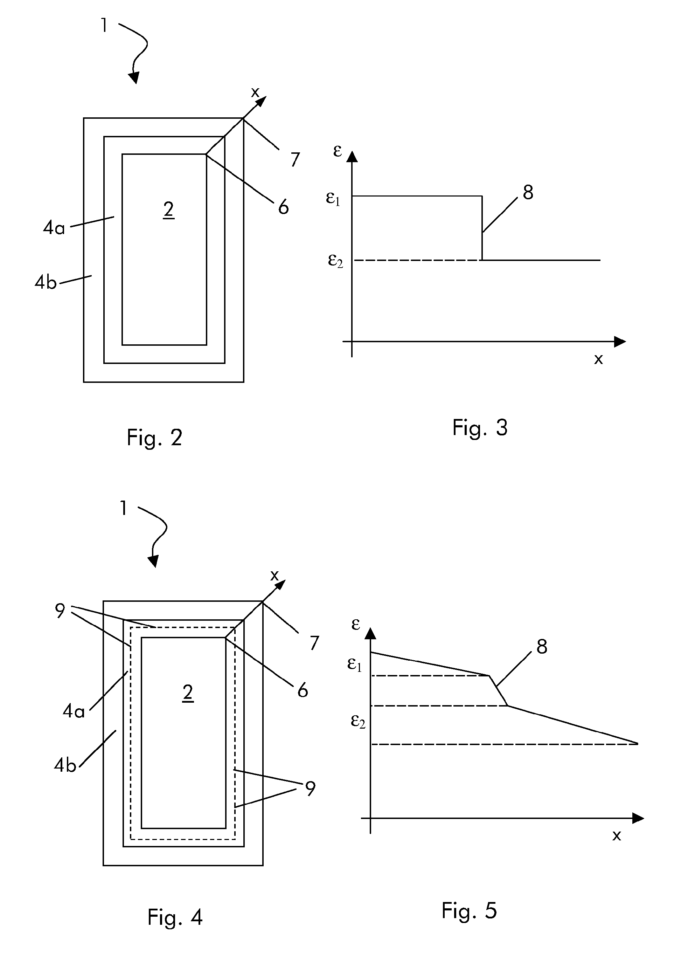

In a first embodiment (figure 2), the insulation comprises a first mica tape 4a wrapped around the conductive element 2 and a second mica tape 4b wrapped around the first mica tape 4a.

In this embodiment the first mica tape permittivity $\varepsilon_1$ is higher than the second mica tape permittivity $\varepsilon_2$.

In particular, the first mica tape 4a and the second mica tape 4b are made of different types of mica having different permittivity.

For example the first mica tape 4a is made of muscovite mica and the second mica tape 4b is made of phlogopite mica.

Figure 3 shows the permittivity run in the direction of maximum field (being the radial direction x) through the insulation 4.

In this embodiment the insulation 4 has the first permittivity $\varepsilon_1$ at the zones 6 of the insulation 4 close to the conductive element 2; this part of the insulation is made of the first mica tape 4a.

In contrast, the outer zones 7 of the insulation 4 are made of the second mica tape 4b and have a lower permittivity $\varepsilon_2$.

Between the permittivity values $\varepsilon_1$ and $\varepsilon_2$ a permittivity step 8 is defined.

In a second embodiment (figure 4), instead of different micas, the first mica tape 4a at the inner insulation zones 6 close to the conductive element 2 comprises particles 9 having high permittivity and the second mica tape 4b at the outer insulation zones 7 has a lower amount or no particles 9; in the embodiment shown only the mica tape 4a has the particles 9.

For example these particles 9 are $Al_2O_3$ particles.

The permittivity varies as shown in figure 5 (that shows the permittivity run in the direction of maximum field being the radial direction x); as shown the permittivity is not constant through the insulation 4 but it has two gradually decreasing areas with a kind of step 8 inbetween.

In a third embodiment (figure 6) the different permittivity through the insulation 4 is achieved by changing the resin content of the mica tape 10.

In fact since the resin has a much lower permittivity than the mica, reducing its amount increases the insulation permittivity.

In particular, the inner insulation zones 6 close to the conductive element 2 have a lower resin content than the insulation at the outer insulation zones 7.

In order to achieve different resin contents, the mica tape 10 constituting the insulation 4 may be wrapped with different wrapping tension.

In fact, if the wrapping tension is higher at the beginning and lower at the end of the wrapping, the mica tape at the inner insulation zones 6 is more compressed than the following mica tape at the outer insulation zones 7, this causes the resin to be pressed out from the mica tape at the zones 6 in a larger amount than from the mica tape at the zones 7; therefore, the resin is retained in the outer insulation zones 7 in a greater amount than in the inner insulation zones 6.

By optimised controlling the wrapping tension, the permittivity in the insulation may define one or more steps or may at least partly continuously decrease (see figure 7 that shows the permittivity run in the direction of maximum field being the radial direction x).

Alternatively, changing of the resin content to change the insulation permittivity can be achieved using mica tapes having different compressibility.

Additionally, strips of mica tape that are not wrapped but aligned parallel to the corners of the conductive element can also be used to change the resin content and, thus, to achieve a change in permittivity.

Naturally the features described may be independently provided from one another.

In practice the materials used and the dimensions can be chosen at will according to requirements and to the state of the art.

REFERENCE NUMBERS

[0048]

| 1 | stator bar |
| 2 | conductive element |
| 3 | strands |
| 4 | insulation |
| 4a | first mica tape |
| 4b | second mica tape |
| 5 | corner |
| 6 | inner insulation zone |
| 7 | outer insulation zone |
| 8 | step |
| 9 | high permittivity particles |
| 10 | mica tape |
| $\varepsilon, \varepsilon_1, \varepsilon_2$ | permittivity |
| x | radial direction |
| R | radius |

**Claims**

1. Stator bar (1) comprising a substantially quadrangular conductive element (2) made of a plurality of interwoven strands (3) and an electric insulation (4) applied around it, **characterised in that** the permittivity at the corners (5) of the electric insulation (4) decreases by less than 60% from an inner insulation zone (6) facing the conductive element (2) towards an outer insulation zone (7) and the radius of the corner (5) is less than 3 millimetres.

2. Stator bar (1) as claimed in claim 1, **characterised in that** the electric insulation permittivity decrease is comprised between 35-45% and the radius of the corners (5) is between 1.5-2.5 millimetres.

3. Stator bar (1) as claimed in claim 2, **characterised in that** said insulation comprises a mica tape (4a, 4b, 10) impregnated with a resin.

4. Stator bar (1) as claimed in claim 3, **characterised in that** said insulation (4) comprises a first mica tape (4a) wrapped around the conductive element (2) and a second mica tape (4b) wrapped around the first mica tape (4a), the first mica tape permittivity being higher than the second mica tape permittivity.

5. Stator bar (1) as claimed in claim 4, **characterised in that** the first mica tape (4a) and the second mica tape (4b) are made of different mica having different permittivity.

6. Stator bar (1) as claimed in claim 5, **characterised in that** the first mica tape (4a) includes Muscovite mica and the second mica tape (4b) includes Phlogopite mica.

7. Stator bar (1) as claimed in claim 4, **characterised in that** the first mica tape (4a) comprises particles (9) having high permittivity and the second mica tape (4b) comprises a lower amount or no particles (9) having high permittivity.

8. Stator bar (1) as claimed in claim 7, **characterised in that** said particles (9) having high permittivity are $Al_2O_3$ particles.

9. Stator bar (1) as claimed in claim 3, **characterised in that** mica tape (10) at the inner insulation zone (6) has a lower resin content than mica tape (10) at the outer insulation zone (7).

10. Stator bar (1) as claimed in claim 9, **characterised in that** in order to achieve a different resin content, said mica tape (10) is wrapped with different wrapping tension, the wrapping tension being higher at the beginning and lower at the end of wrapping.

11. Stator bar (1) as claimed in claim 9, **characterised in that** in order to achieve a different resin content, mica tapes having different compressibility are used.

12. Stator bar (1) as claimed in claim 9, **characterised in that** in order to achieve a different resin content, strips of mica tape that are not wrapped but aligned parallel to the corners (5) of the conductive element (2) are used.

13. Stator bar (1) as claimed in claim 1 or 2, **characterised in that** said permittivity defines at least a step (8).

14. Stator bar (1) as claimed in claim 1 or 2, **characterised in that** said permittivity decreases at least partly continuously in radial direction.

Fig. 1

Fig. 2

Fig. 3

Fig. 4

Fig. 5

Fig. 6

Fig. 7

Fig. 8

EP 2 403 113 A1

Europäisches
Patentamt

European
Patent Office

Office européen
des brevets

**EUROPEAN SEARCH REPORT**

Application Number

EP 10 16 8235

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/029897 A1 (YOUNSI A KARIM [CA] ET AL) 14 March 2002 (2002-03-14) * figure 4 * * paragraphs [0022], [0031], [0037] * ----- | 1-14 | INV. H02K3/40 ADD. H02K3/14 |
| A | FR 2 290 071 A1 (WESTINGHOUSE ELECTRIC CORP [US]) 28 May 1976 (1976-05-28) * figure 3 * * page 6 * ----- | 1 | |
| A | EP 0 951 132 A2 (ABB RESEARCH LTD [CH] ALSTOM [FR] ALSTOM TECHNOLOGY LTD [CH]) 20 October 1999 (1999-10-20) * figure 4 * * paragraph [0018] * ----- | 1,2 | |
| A | REHDER R H ET AL: "CORONA DETERIORATION REDUCTION IN LARGE ELECTRICAL MACHINE INSULATION", IEEE INDUSTRY APPLICATIONS MAGAZINE, IEEE SERVICE CENTER, PISCATAWAY, NJ, US, vol. 1, no. 1, 1 January 1995 (1995-01-01), pages 12-15, XP000497975, ISSN: 1077-2618, DOI: DOI:10.1109/2943.378056 * figure 3 * ----- | 1 | TECHNICAL FIELDS SEARCHED (IPC) H02K |
| A,D | WO 2007/139490 A1 (ABB TECHNOLOGY LTD [CH]; MAARTENSSON EVA [SE]; ERIKSSON HANS-AAKE [SE]) 6 December 2007 (2007-12-06) * page 4, line 5 - line 7 * ----- | 7,8 | |
| A,D | DE 198 11 370 A1 (ABB RESEARCH LTD [CH]) 23 September 1999 (1999-09-23) * column 4, line 7 - line 15 * ----- | 14 | |

The present search report has been drawn up for all claims

| Place of search | Date of completion of the search | Examiner |
|---|---|---|
| The Hague | 19 April 2011 | Le Chenadec, Hervé |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 16 8235

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2011

| Patent document cited in search report | | Publication date | Patent family member(s) | | | Publication date |
|---|---|---|---|---|---|---|
| US 2002029897 | A1 | 14-03-2002 | AT | 284086 | T | 15-12-2004 |
| | | | AU | 8745701 | A | 26-03-2002 |
| | | | BR | 0113868 | A | 22-07-2003 |
| | | | WO | 0223696 | A1 | 21-03-2002 |
| | | | CA | 2344564 | A1 | 14-03-2002 |
| | | | CN | 1455978 | A | 12-11-2003 |
| | | | DE | 60107587 | D1 | 05-01-2005 |
| | | | DE | 60107587 | T2 | 15-12-2005 |
| | | | EP | 1319266 | A1 | 18-06-2003 |
| | | | ES | 2232659 | T3 | 01-06-2005 |
| | | | JP | 3721359 | B2 | 30-11-2005 |
| | | | JP | 2004508800 | T | 18-03-2004 |
| | | | MX | PA03002268 | A | 03-12-2004 |
| | | | NZ | 522910 | A | 29-07-2005 |
| FR 2290071 | A1 | 28-05-1976 | BE | 834922 | A1 | 28-04-1976 |
| | | | CA | 1040696 | A1 | 17-10-1978 |
| | | | CH | 607414 | A5 | 15-12-1978 |
| | | | DE | 2548328 | A1 | 06-05-1976 |
| | | | ES | 442155 | A1 | 01-04-1977 |
| | | | GB | 1526081 | A | 27-09-1978 |
| | | | IT | 1050995 | B | 20-03-1981 |
| | | | JP | 51066476 | A | 09-06-1976 |
| | | | NO | 752943 | A | 30-04-1976 |
| | | | SE | 7512118 | A | 16-06-1976 |
| EP 0951132 | A2 | 20-10-1999 | AT | 361577 | T | 15-05-2007 |
| | | | CN | 1233101 | A | 27-10-1999 |
| | | | DE | 19817287 | A1 | 21-10-1999 |
| | | | JP | 3955696 | B2 | 08-08-2007 |
| | | | JP | 11332154 | A | 30-11-1999 |
| | | | US | 6404092 | B1 | 11-06-2002 |
| WO 2007139490 | A1 | 06-12-2007 | NONE | | | |
| DE 19811370 | A1 | 23-09-1999 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007139490 A

- DE 19811370